# EUROPÄISCHE PATENTSCHRIFT

(11) **EP 1 386 013 B1**
(45) Veröffentlichungstag und Bekanntmachung des Hinweises auf die Patenterteilung: **22.06.2005**
(21) Anmeldenummer: 02732669.3
(22) Anmeldetag: 25.04.2002
(51) Int. Cl.: C22B 7/02, C22B 1/245, C21B 13/00, C02F 11/00, C21B 13/14

(54) **VERFAHREN ZUR VERWERTUNG VON WALZZUNDERSCHLÄMMEN UND FEINKOHLEN**
METHOD FOR REUTILIZING MILL SCALE SLUDGES AND COAL FINES
PROCEDE DE VALORISATION DES BOUES DE BATTITURES DE LAMINAGE ET DES FINES DE CHARBON

(30) Priorität: 08.05.2001 AT 734012001
(43) Veröffentlichungstag der Anmeldung: 04.02.2004
(73) Patentinhaber: Voest-Alpine Industrieanlagenbau GmbH & Co., 4020 Linz (AT)
(72) Erfinder: SCHREY, Günter, A-4040 Linz (AT); ZAHEDI, Parviz, A-4481 Asten (AT)
(74) Vertreter: VA TECH Patente GmbH & Co
(86) Internationale Anmeldenummer: PCT/EP2002/004575
(87) Internationale Veröffentlichungsnummer: WO 2002/090604

(56) Entgegenhaltungen:
- WO-A-99/01583
- DE-A- 4 101 584
- US-A- 3 870 507
- US-A- 3 966 427
- US-A- 4 032 352
- US-A- 4 995 904
- US-A- 5 885 328
- DATABASE EPODOC [Online] EUROPEAN PATENT OFFICE, THE HAGUE, NL; XP002219781 & CN 1 120 074 A (BAOSHAN IRON & STEEL UP CORP) 10. April 1996 (1996-04-10)

## Beschreibung

Die Erfindung betrifft ein Verfahren zur Verwertung von kohlenwasserstoff- und eisenoxidhaltigen Abfallprodukten, insbesondere Walzzunderschlämmen, und Feinkohlen in bzw. aus einem Hüttenwerk.

Bei der Stahlverarbeitung, vor allem im Bereich des Ur- oder Umformens, fällt sogenannter Zunder an. In einem Walzwerk spricht man dabei von Walzzunder.

Im Bereich eines Walzwerkes erfolgt dabei durch Betriebsmittel, beispielsweise Fette oder Öle, eine Kontamination des Zunders, wodurch eine Wiederverwertung dieser Abfallstoffe bedeutend erschwert wird.

Im Stand der Technik sind verschiedene Methoden bekannt, einen Walzzunderschlamm, wie eine Mischung aus Zunder, Öl oder Fett, und Wasser im Allgemeinen genannt wird, einer Wiederverwertung zu zufuhren. Dabei wird der Walzzunderschlamm, der im Zuge der Abwasseraufbereitung des Hüttenwerks, insbesondere in einem Walzwerk, anfällt, durch spezielle Verfahren und Vorrichtungen nutzbar gemacht. Vor allem die Kohlenwasserstoffe, die im Walzzunderschlamm enthalten sind, erweisen sich dabei als problematisch, da bei einer herkömmlichen thermischen Verwertung des Walzzunderschlammes, beispielsweise in einem Drehrohrofen, gesundheitsschädliche Abgase entstehen. Solche Verfahrensweisen erweisen sich nicht zuletzt aus diesem Grund als unwirtschaftlich.

In der Veröffentlichung DE19755389A1 ist ein Verfahren zum pneumatischen Fördern und Einblasen von Schüttgut, insbesondere von Walzenzunder, in einen metallurgischen Schmelzreaktor, insbesondere einen Einschmelzvergaser, gelehrt. In dieser Veröffentlichung werden die prozesstechnischen Konsequenzen des Eintrages des Schüttgutes in einen Einschmelzvergaser jedoch kaum berücksichtigt. Abfallstoffe können deshalb nach dieser Lehre nur sehr beschränkt in einem Einschmelzvergaser verwertet werden.

In EP0373577A1 wird eine Vorrichtung sowie ein Verfahren zur Aufbereitung von, organische Anteile aufweisenden, Klär- oder Industrieschlämmen gelehrt. Im Rahmen des gelehrten Konversionsverfahrens werden die Schlämme mechanisch vorentwässert, in den Innenraum eines indirekt beheizten Stetigförderers befördert und dort einer Aufheizung bei gleichzeitigem Austrieb der leichtflüchtigen Komponenten ausgesetzt. In einer darauffolgenden zweiten Stufe erfolgt ein Verweilen bei Konversionstemperatur zum restlichen Austrieb der flüchtigen Komponenten aus dem Feststoffprodukt. In der Praxis stellt sich diese Vorgangsweise als vergleichsweise ineffizient dar, da sie einen hohen prozess- wie auch anlagentechnischen Aufwand erfordert.

DE19715839A1 behandelt ein Verfahren sowie eine Vorrichtung zur Reinigung von öl- und wasserhaltigen Walzzunderschlämmen in zwei Verfahrensschritten, wobei die Schlämme in dem zweiten Verfahrensschritt einer Vakuumtrocknung unterzogen werden. Wiederum zeigt die Praxis eine relative Ineffizienz der Anlage, insbesondere hohe Errichtungs- und Betriebskosten.

DE3440037A1 lehrt ein Verfahren zur Heißbrikettierung von Walzzunderschlämmen mit Fettkohle und nachfolgender pyrometallurgischer Verwertung. Bei der gelehrten pyrometallurgischen Verwertung der Walzzunderschlämme in einem Hochofen treten dabei hohe Konzentrationen an gesundheitsschädlichen Abgasen auf Weiters erweist sich das gelehrte Verfahren in der praktischen Ausführung als aufwendig und kostenintensiv. Der nach diesem Verfahren hergestellte Formkoks weist verschlechterte metallurgische Eigenschaften auf.

Aus der WO 99/01583 ist es bekannt, getrockneten Kohlestaub mit Bitumen zu vermischen, kalt zu brikettieren und in einen Einschmelzvergaser einzusetzen. In der Veröffentlichung wird die Problematik kohlenwasserstoff- bzw. eisenoxidhältiger Abfallstoffen aber nicht gelöst.

US-A-3870507 lehrt die Brikettierung von staubförmigen eisen- und kohlenstoffhaltigen Abfallstoffen unter Verwendung von bituminösem Binder und ein zugehöriges Brikettierverfahren zur Reduktion von Abfällen in einem Stahlwerk. Dabei wird aber nicht die Problematik flüchtiger Stoffe bei der Verarbeitung dieser Briketts gelöst.

Die DE-A-4101584 lehrt ein Verfahren zur Aufbereitung von ölhältigem Walzenzunder unter Verwendung eines Bindemittels zur Wiederverwertung in einem Stahlprozess. Nachteilig an diesem Verfahren ist der erhebliche Bedarf an Bindemittel bzw. an Katalysator bzw. der dadurch verursachten Umweltbelastung.

US-A-4995904 behandelt ein Verfahren zur Herstellung von Roheisen, wobei Feinkohle unter Einsatz von Bindemittel zu einem stückigen Kohleträger eingesetzt wird. Die Problematik der Verarbeitung von ölhaltigen, eisenoxidhaltigen, Abfallstoffen wird nicht gelöst.

Der vorliegenden Erfindung liegt daher die Aufgabe zugrunde, die Nachteile aus dem Stand der Technik zu überwinden, und ein einfaches und wirtschaftliches Verfahren entsprechend dem Oberbegriff des Anspruchs 1 zu entwickeln.

Diese Aufgabe wird entsprechend dem erfindungsgemäßen Verfahren nach dem kennzeichnenden Teil des Anspruchs 1 gelöst.

Ein Einschmelzvergaser bezeichnet ein metallurgisches Aggregat, wie aus dem Stand der Technik bekannt.

Das vorliegende erfindungsgemäße Verfahren erweist sich für die Verwertung von Walzzunderschlämmen als besonders gut geeignet. Grundsätzlich können jedoch alle kohlenwasserstoff- und eisenhaltigen, insbesondere eisenoxidhaltigen, Abfallstoffe, beispielsweise ölhaltige Schleifschlämme, nach dem erfindungsgemäßen Verfahren verwertet werden.

Als ein wesentliches Ziel der vorliegenden Erfindung gilt die Verbesserung der thermomechanischen und metallurgischen Eigenschaften der kohlenstoffhaltigen Einsatzstoffe, insbesondere der verwendeten minderwertigen Kohlen, vorzugsweise Feinkohlen.

Zielten die Anstrengungen des Fachmannes bislang, wie im Stand der Technik ausführlich dokumentiert, im wesentlichen darauf hin, die Walzzunderschlämme so weit als möglich, im Zuge einer Vorbehandlung, von Kohlenwasserstoffen zu befreien, werden nach dem erfindungsgemäßen Verfahren diese Schlämme erstmals in wirtschaftlich besonders vorteilhafter und einfacher Weise, insbesondere ohne aufwendige Vorbehandlung, in einer Einschmelzvergasungszone zur Gänze umgesetzt. Demnach wird sowohl der Kohlenstoff der minderwertigen Kohle, insbesondere einer, gegebenenfalls hochblähenden, Feinkohle, als auch das Eisenoxid des Abfallstoffes zielführend zur Aufbesserung der Eisen- und Energiebilanz eines Eisenerzeugungsverfahrens verwertet.

Gegenüber der Verwertung von Abfallstoffen in einem Hochofen zeichnet sich die Verwertung in einem Einschmelzvergaser dadurch aus, dass durch die hohen Temperaturen in einem Einschmelzvergaser eine sofortige Zersetzung der kohlenwasserstoffhaltigen Komponenten in die molekularen Grundbestandteile erfolgt. Bei den hohen Temperaturen in einem Einschmelzvergaser, insbesondere in einer Einschmelzvergasungszone eines Einschmelzvergasers, sind im wesentlichen nur mehr CO und H₂ existent. Bei einem Schachtofen erfolgt aufgrund der schichtweisen Chargierung eine kontinuierliche Erwärmung des Einsatzgutes, welches in Form einer Möllersäule vorliegt, und damit ein Abdampfen von kondensierenden Kohlenwasserstoffen.

Nach einer bevorzugten Ausführungsform des erfindungsgemäßen Verfahrens weist das Abfallprodukt einen Kohlenwasserstoffgehalt von größer als 0,1 Gew%, insbesondere zwischen 0,1 oder 0,2 Gew% und 2 Gew%, auf. Bei den Kohlenwasserstoffen handelt es sich vorzugsweise um Fette oder Öle, beispielsweise Walzöle oder Walzfette, die sich durch eine hohe thermische Stabilität auszeichnen. Bislang waren derart kontaminierte Abfallstoffe nur begrenzt oder unter großem Aufwand verwertbar.

Nach einer bevorzugten Ausführungsform der Erfindung besteht das Abfallprodukt überwiegend aus metallischem Eisen, insbesondere aus zumindest 1 Gew% Fe, und Eisenoxiden, insbesondere aus Fe₂O₃ und/oder Fe₃O₄.

Nach einer bevorzugten Ausführungsform der vorliegenden Erfindung erfolgt die Chargierung der Agglomerate durch Schwerkraft, beispielsweise im, vorzugsweise oberen, Kuppelbereich des Einschmelzvergasers, vorzugsweise oberhalb des Festbettes.

Für den Betrieb eines Einschmelzvergasers ist ein fester Kohlenstoffträger, insbesondere eine stückige Kohle, mit einer guten thermomechanischen Stabilität sowie einer entsprechenden Korngröße, insbesondere größer als 8 mm, erforderlich. Eine derartige Kohle ist schwer verfügbar und entsprechend teuer bzw. mit feinen nicht verwertbaren Partikeln begleitet, die ohne eine entsprechende und aufwendige Vorbehandlung bei ihrem Einsatz im Einschmelzvergaser den Schmelzprozess nachteilig beeinflussen.

Bislang war eine agglomerierte, insbesondere brikettierte, Feinkohle nur begrenzt als vollwertiger Ersatz für stückige Kohle in einem Einschmelzvergaser einsetzbar. Durch Verwendung von geeigneten Abfallstoffen, beispielsweise Walzzunderschlämmen, in einem Verfahren zur Erzeugung von agglomerierten, insbesondere brikettförmigen, Kohlenstoffträgern aus Feinkohle, werden, wie sich in Versuchen gezeigt hat, die Thermostabilität, insbesondere die thermomechanischen Eigenschaften, und/oder die metallurgischen Eigenschaften der Agglomerate wesentlich verbessert, sowie das Blähverhalten, insbesondere hochflüchtiger, gegebenenfalls junger, Kohlen, im Einschmelzvergaser gedämpft. Somit kann der Einsatz brikettierter Feinkohle entsprechend dem erfindungsgemäßen Verfahren erweitert werden. Damit ist eine nennenswerte Kosteneinsparung verbunden.

Nach einer bevorzugten Ausführungsform der Erfindung handelt es sich bei dem verwendeten Einschmelzvergaser um einen Einschmelzvergaser nach dem, dem Fachmann bekannten, COREX-Verfahren. Die Ausgestaltung sowie der Betrieb des Einschmelzvergasers, insbesondere der Aufbau eines Festbettes eines Einschmelzvergasers, erfolgt nach einer besonderen Ausführungsform der Erfindung entsprechend der nach der bekanntgemachten Patentanmeldung AT16132000 geoffenbarten Lehre.

Nach einer weiteren bevorzugten Ausführungsform der Erfindung erfordert der Betrieb des Einschmelzvergasers den Einsatz eines stückigen Kohlenstoffträgers, insbesondere stückiger Kohle, zum Aufbau eines Festbettes. Dieses durchgasungsfähige Festbett ermöglicht eine Fertigreduktion des Eisenoxides, insbesondere in Form einer Festbettreduktion, sowie eine Drainage des flüssigen, aufgeschmolzenen Roheisens. Der dazu eingesetzte stückige Kohlenstoffträger muß diesbezügliche eine ausreichend hohe thermomechanische Stabilität sowie eine geeignete Korngröße aufweisen. Weiters soll der verwendete Kohlenstoffträger gute metallurgische Eigenschaften, insbesondere eine gute Reaktivität und/oder eine möglichst niedrige Blähneigung, aufweisen.

Nach einer besonderen Ausführungsform des erfindungsgemäßen Verfahren bildet der mit Feinkohle vermischte und agglomerierte Abfallstoff zumindest teilweise den stückigen Kohlenstoffträger, wie er zum Betrieb des Einschmelzvergaser benötigt wird. Hiermit ist es möglich die im Prozess nicht direkt verwertbare, und gegebenenfalls von der stückigen Urkohle abgetrennte, Feinkohle zu verwerten und damit gleichzeitig zumindest teilweise auf den Einsatz einer stückigen Urkohle, wie sie normalerweise zu gekauft werden muß, zu verzichten, und hiermit erhebliche Einsparungen zu realisieren. Als Urkohle wird definitionsgemäß die zugekaufte stückige Kohle bezeichnet, die nahezu immer von einer Feinkohle begleitet wird, wie sie beispielsweise beim Transport entsteht.

Nach einer besonderen Ausführungsform besteht das hergestellte Agglomerat hinsichtlich seines Volumens überwiegend auf Feinkohle.

Nach einer besonderen Ausführungsform der Erfindung liegt der eisenhaltige Abfallstoff in der Feinkohle, insbesondere nach der Homogenisierung und/oder Agglomeration, fein verteilt vor. Nach einer besonderen Ausführungsform der Erfindung wird der Abfallstoff deshalb vor der Vermischung mit der Feinkohle zerkleinert, insbesondere in einer Mühle fein vermahlen.

Nach einer besonderen Ausführungsform der Erfindung wird die Lagerfähigkeit der hergestellten Agglomerate verbessert, da durch den Einsatz von Walzzunderschlämmen oder entsprechenden Abfallstoffen, Bitumen mit höheren Erweichungspunkten als Binder verwendet werden können, welche wiederum die Sprödigkeit der Agglomerate, vorzugsweise in der kalten Jahreszeit bzw. bei niedrigen Temperaturen, herabsetzen.

Nach einer besonderen Ausführungsform des erfindungsgemäßen Verfahren handelt es sich bei der Agglomerierung um eine Kaltbrikettierung, die insbesondere bei Temperaturen unterhalb von 100 °C, vorzugsweise unterhalb von 85 °C, durchgeführt wird. Diese Form der Agglomeration zeichnet sich durch ihre besondere Wirtschaftlichkeit aus.

Nach einem Merkmal des erfindungsgemäßen Verfahrens wird das Abfallprodukt in der Einschmelzvergasungszone in einen kohlenstoffhaltigen, insbesondere kohlenwasserstoffhaltigen, und einen eisenoxidhaltigen Anteil zerlegt, wobei der kohlenstoffhaltige, insbesondere kohlenwasserstoffhaltige, Anteil im wesentlichen zu CO und H₂ umgesetzt, und der eisenoxidhaltige Anteil reduziert und aufgeschmolzen wird. Auf diese Weise steht dem Verfahren reduzierendes CO zur Verfügung, das einerseits in der Einschmelzvergasungszone selbst, sowie andererseits beispielsweise zur Reduktion eines metalloxidhaltigen Einsatzmateriales in einem Reduktions-Schachtofen eingesetzt werden kann. Der Eisenanteil der Agglomerate wird fertigreduziert und aufgeschmolzen und trägt so zu einer Erhöhung der Eisenausbeute der Einschmelzvergasungszone bei.

Die Verwertung von Walzzunder kann so im Rahmen einer geschlossenen Kreislaufwirtschaft eines Hüttenwerkes verwirklicht werden. Zudem trägt die Feinkohle, die vorzugsweise durch zerkleinernd wirkende Mechanismen während des Transportes der stückigen Kohle anfällt, und im Stand der Technik bislang nicht ausreichend berücksichtigt wird, in direkter Weise zur Roheisenerzeugung bei und verbessert so die Wirtschaftlichkeit des Verfahrens zur Roheisengewinnung.

Erstmalig läßt sich durch die gelehrte direkte Verwertung der Abfallstoffe in einem Einschmelzaggregat ein volkswirtschaftlicher Nutzen erzielen.

Nach einem weiteren Merkmal des erfindungsgemäßen Verfahren wird/werden das Bindemittel und/oder das Abfallprodukt und/oder die Feinkohle, als Hauptkomponente des Agglomerates, bei der Agglomerierung und/oder vor der Agglomerierung mit Hüttenstäuben versetzt.

Hüttenstäube wurden bislang unter erheblichem Kostenaufwand deponiert. Erfindungsgemäß wird durch die Zugabe von Hüttenstäuben, beispielsweise zu dem Abfallstoff und/oder der Feinkohle, die Agglomeration optimiert und aus der vollständigen Verwertung der Hüttenstäube ein volkswirtschaftlicher Nutzen erzielt. Durch die Zugabe der Hüttenstäube wird insbesondere die Festigkeit und Lagerbeständigkeit der Agglomerate verbessert.

Nach einem weiteren Merkmal der Erfindung wird das Abfallprodukt vor der Agglomerierung, vorzugsweise mittels einer Filterpresse und/oder Zentrifuge, auf weniger als 15 Gew% Restfeuchte, insbesondere weniger als 10 Gew% Restfeuchte entwässert. Die solcherart hergestellten Agglomerate zeichnen sich durch hohe Festigkeit und gute Lagerbarkeit aus.

Die Erfindung betrifft nach einer weiteren Ausführungsform ein Verfahren zur Erzeugung von Roheisen und/oder Stahlvorprodukten mittels einer Einschmelzvergasungszone, in der ein eisenhaltiger Einsatzstoff unter Zufuhr eines Kohlenstoffträgers und sauerstoffhaltigem Gas erschmolzen wird, und der Kohlenstoffträger zumindest teilweise aus einem kohlenwasserstoff- und eisenoxidhaltigen Abfallstoff, insbesondere einem Walzzunderschlamm, gebildet wird. Bei diesen Verfahren gelten die bereits angeführten Vorteile bezüglich der Verwertung des Abfallstoffes, insbesondere des Walzzunderschlammes.

Nach einer besonderen Ausführungsform des erfindungsgemäßen Verfahrens, wird der Abfallstoff vor seinem Einsatz in der Einschmelzvergasungszone als eine Mischkomponente mit einer vorbestimmten Menge der zu agglomerierenden Feinkohle, und gegebenenfalls bituminösen Stoffen, versetzt bzw. vermischt und agglomeriert.

Nach einer weiteren Ausführungsform des erfindungsgemäßen Verfahren wird, zur Roheisenerzeugung, der eisenhaltige Einsatzstoff, vor seiner Einbringung in die Einschmelzvergasungszone, in einer Reduktionszone, beispielsweise in einem, vorzugsweise als Prereduktionszone ausgebildetem, Reduktionsschachtofen, zumindest teilweise, beispielsweise von Haematit und/oder Magnetit zu Eisenschwamm, reduziert. Nach einer bevorzugten Ausführungsform der Erfindung erfolgt die nachfolgende Fertigreduktion und/oder Einschmelzung des eisenhaltigen Einsatzstoffes zur Erzeugung von Roheisen in dem Einschmelzvergaser.

Nach einem weiteren Merkmal des erfindungsgemäßen Verfahren wird aus dem Kohlenstoffträger in der Einschmelzvergasungszone ein CO und H₂-haltiges Gas erzeugt, das an der Einschmelzvergasungszone abgezogen und als Reduktionsgas in die Reduktionszone, beispielsweise in den Reduktionsschachtofen, eingeleitet wird.

Für den Betrieb eines Einschmelzvergasers ist nach einer bevorzugten Ausführungsform ein stückiger Kohlenstoffträger mit guten thermischen, thennomechanischen und metallurgischen Eigenschaften, insbesondere einer hohen Thermostabilität, erforderlich. Die Korngröße des Kohlenstoffträgers soll dabei zumindest 8 mm betragen.

Um auch Feinkohle, Kohleunterkorn aus Absiebungen und staubförmige Kohle einsetzen zu können, ist es nach dem Stand der Technik üblich, diese Einsatzstoffe zu agglomerieren. Das Kaltbrikettieren von Kohle mit Bindern ist eine aus Literatur und Praxis bekannte Methode. Vorzugsweise werden dabei für den Einsatz in einem Einschmelzvergaser eingangs beschriebener Art die feinen kohlehaltigen Einsatzstoffe durch Verwendung von Bitumen als Binder agglomeriert.

Bitumen ist zwar weltweit verfügbar, unterliegt jedoch den Schwankungen des Erdölmarktpreises.

Aus diesem Grund wird erfindungsgemäß vorgeschlagen, Bitumen mit einem Feinzunder zu versetzen und dieses Gemisch als Binder für die Herstellung der Agglomerate aus feinkörnigen Kohleträgern zu verwenden.

Durch diese Maßnahmen ergeben sich folgende Vorteile:
- Einsparung von Bitumen infolge des teilweisen Ersatzes durch feinen Walzzunderschlamm
- Gute Benetzbarkeit des Bitumen mit dem Ölanteil des Walzzunderschlammes
- Erhöhung der thermomechanischen Stabilität der Agglomerate durch feinstes Inertmaterial, insbesondere durch den, vorzugsweise fein verteilten Abfallstoff, im Koksgerüst, welches das Blähverhalten der so agglomerierten, hochflüchtigen Kohle im Einschmelzvergaser dämpft.
- Einsatz von Bitumen mit höherem Erweichungspunkt wird durch den Zusatz von ölhaltigem Feinzundergemisch möglich
- Bessere Lagerfähigkeit der hergestellten Agglomerate, da die Sprödigkeit von Agglomeraten, insbesondere in der kalten Jahreszeit bzw. tiefen Temperaturen, bei der Verwendung von Bitumen mit erhöhtem Erweichungspunkt bei Zusatz von feinem Walzzunderschlamm herabgesetzt wird.

Die ökonomischen Vorteile lassen sich folgenderweise zusammenfassen:
- Ölhaltiger Zunder, der in Hüttenwerken als problematischer Abfallstoff anfällt und üblicherweise entsorgt werden muß (Deponie), kann vorteilhafter Weise im Sinne der Kreislaufwirtschaft unter optimaler Ausnutzung seiner Inhaltsstoffe wiederverwertet werden. Der Ölgehalt des Zunders ermöglicht die Herabsetzung des Bitumenanteils und kann darüber hinaus im Einschmelzvergaser energetisch genutzt werden. Weiters erfolgt die quantitative Nutzung des Eisengehaltes des Walzzunderschlammes durch den Einsatz in einem Einschmelzvergaser nach dem beschriebenen Verfahren zur Herstellung von Roheisen.

Eine typische, jedoch nicht einschränkende, Zusammensetzung eines verwendeten Walzzunders lautet:

| | |
|---|---|
| Eisen metallisiert | ca. 1 Gew% |
| Eisen Fe₂O₃ | ca. 56 Gew% |
| Eisen Fe₃O₄ | ca. 38 Gew% |
| Kohlenstoff | ca. 2 Gew% |
| Silicium | ca. 2 Gew% |
| Restoxide | ca. 1 Gew% |

Walzzunderschlämme sind zumeist durch Kohlenwasserstoffgehalte von über 0,1 Gew% insbesondere von über 0,2 Gew% gekennzeichnet, wodurch eine Verwertung dieser Abfallstoffe beispielsweise in einem Sinterverfahren oder in einem Hochofen erschwert wird. Walzzunderschlämme können je nach Herkunft auch Kohlenwasserstoffgehalte von über 0,5-1 Gew% oder sogar von über 2-3 Gew% aufweisen, wobei sich das vorgestellte Verfahren zur Verwertung solcher Abfallstoffe als außerordentlich günstig erweist. Grundsätzlich darf angenommen werden, dass bei steigenden Kohlenwasserstoffgehalt eine dem Stand der Technik entsprechende Vorbehandlung steigende Kosten verursacht, und sich deshalb die erfindungsgemäße Art der Verwertung als besonders wirtschaftlich erweist.

Der Walzzunderschlamm soll nach Möglichkeit nur einen geringen Anteil an Elementen aufweisen, welche, nach Wissen des Fachmanns, zu einer Beeinträchtigung der Qualität des erzeugten Roheisens führen, und wird dementsprechend gegebenenfalls vorbehandelt. So würde beispielsweise ein hoher Schwermetallanteil oder Schwefelgehalt zu empfindlichen Qualitätseinbußen fuhren.

Die Zusammensetzung der zum Einsatz im Einschmelzvergaser bestimmten Agglomerate lautet nach einer besonderen Ausführungsform dabei im wesentlichen wie folgt:
- Feinstkohle (Korngröße < 1mm) - ca. 40-70 Gew% bzw. 90 bis 95 Vol% - und
- Walzzunderschlamm (entwässert) - ca. 30-50 Gew% bzw. 5 bis 10 Vol% - , daneben
- Hüttenstäube (untergeordnete Mengen, dürfen nicht kontaminiert sein) - ca. 10-15 Gew% -
- Binder: ca. 2-5 Gew% Bitumen oder Bitumenemulsion

Die Agglomerate haben vorzugsweise eine Größe zwischen 10 und 40 mm Durchmesser.

Hüttenstäube als Agglomeratkomponenten spielen prinzipiell eine untergeordnete Rolle. In konventionellen Hüttenwerken sind Stäube üblicherweise stark kontaminiert und sind daher für das Rezyklieren in eine Roheisenstufe, wie beispielsweise in einen Einschmelzvergaser, wenig geeignet.

Nicht kontaminierte Stäube aller Art (oxidisch, C-haltig), wie sie beispielsweise bei einem Direktreduktions-Schachtofen anfallen, können dagegen unter Berücksichtigung wirtschaftlicher Überlegungen nach dem gelehrten Verfahren agglomeriert, beispielsweise granuliert, und in die Roheisenstufe rezykliert werden.

Das erfindungsgemäße Verfahren kann vorteilhafterweise in einer Vorrichtung zur Verwertung eines kohlenwasserstoff- und eisenoxidhaltigen Abfallproduktes, insbesondere eines Walzzunderschlammes, in einem Hüttenwerk durchgeführt werden, wobei eine Agglomerierungsanlage zur Herstellung von Agglomeraten aus einem, vorzugsweise homogenisiertem, Gemisch eines kohlenwasserstoff- und eisenoxidhaltigen Abfallstoffes mit einer Feinkohle und gegebenenfalls mit einem bituminösen Material, und weiters ein Einschmelzvergaser zur Verwertung der Agglomerate vorgesehen sind.

An der Agglomerationssanlage kann eine Homogenisierungsvorrichtung vorgesehen werden, in welcher der Abfallstoff, insbesondere der Walzzunderschlamm, sowie die Feinkohle und gegebenenfalls ein bituminöses Material über Dosiereinrichtungen eingebracht, und eine Homogenisierung durchgeführt wird, bevor das homogenisierte Gemisch der Agglomerationsanlage und schließlich in agglomierter Form dem Einschmelzvergaser zugeführt wird. An den jeweiligen Vorrichtungen können Bunkersysteme angeordnet sein, in welchen das Einsatzgut zwischenlagerbar ist.

Die Vorrichtung kann zumindest einen Behälter und/oder zumindest eine Dosiereinrichtung umfassen, wobei dieser/ diese zur Aufbewahrung und/oder dosierten Zugabe der Feinkohle und/oder des Abfallstoffes und/oder anderer Einsatzstoffe, insbesondere von Hüttenstäuben und/oder Bindemittel, an die Agglomerationsanlage und/oder die Homogenisierungsanlage vorgesehen ist/ sind.

## Patentansprüche

1. Verfahren zur Verwertung von kohlenwasserstoff- und eisenoxidhaltigen Abfallprodukten, insbesondere Walzzunderschlämmen, und Feinkohlen, vorzugsweise in einem Hüttenwerk, besonders bevorzugt zur Erzeugung von Roheisen und/oder Stahlvorprodukten, wobei das Abfallprodukt mit der Feinkohle und mit bituminösen Stoffen vermischt und nachfolgend agglomeriert, insbesondere kaltbrikettiert, wird, sowie nachfolgend zum Aufbau eines Festbettes in einen Einschmelzvergaser eingesetzt und in diesem in einer Einschmelzvergasungszone umgesetzt wird.

2. Verfahren nach Anspruch 1, **dadurch gekennzeichnet, dass** das Abfallprodukt einen Kohlenwasserstoffgehalt von größer als 0,1 Gew%, insbesondere von größer als 0,2 Gew%, aufweist.

3. Verfahren nach Anspruch 1 oder 2, **dadurch gekennzeichnet, dass** das Abfallprodukt in der Einschmelzvergasungszone in einen kohlenstoffhaltigen und einen eisenoxidhaltigen Anteil zerlegt wird, wobei der kohlenstoffhaltige Anteil im wesentlichen zu CO und H₂ umgesetzt, und der eisenhaltige Anteil reduziert und aufgeschmolzen wird.

4. Verfahren nach einem oder mehreren der Ansprüche 1 bis 3, **dadurch gekennzeichnet, dass** die Feinkohle und/oder das Abfallprodukt bei der Agglomerierung und/oder vor der Agglomerierung mit Hüttenstäuben vermischt wird/werden.

5. Verfahren nach einem oder mehreren der Ansprüche 1 oder 4, **dadurch gekennzeichnet, dass** das Abfallprodukt vor der Agglomerierung, vorzugsweise mittels einer Filterpresse und/oder Zentrifuge, auf weniger als 10 Gew% Restfeuchte entwässert wird.

## Claims

1. Method for utilizing hydrocarbon-containing and iron-oxide-containing waste products, in particular rolling scale sludges, and fine coals, preferably in a metallurgical plant, particularly preferably for producing pig iron and/or primary steel products, in which the waste product is mixed with the fine coal and with bituminous substances, and is then agglomerated, in particular cold-briquetted, and is then used to build up a fixed bed in a melter gasifier and is converted in the latter in a melting-gasification zone.

2. Method according to Claim 1, **characterized in that** the waste product has a hydrocarbon content of greater than 0.1% by weight, in particular of greater than 0.2% by weight.

3. Method according to Claim 1 or 2, **characterized in that** the waste product is broken down into a carbon-containing fraction and an iron-oxide-containing fraction in the melting-gasification zone, the carbon-containing fraction being converted substantially into CO and H₂ and the iron-containing fraction being reduced and melted down.

4. Method according to one or more of Claims 1 to 3, **characterized in that** the fine coal and/or the waste product is/are mixed with metallurgical dusts during the agglomeration and/or prior to the agglomeration.

5. Method according to one or more of Claims 1 or 4, **characterized in that** the waste product is dewatered to less than 10% by weight of residual moisture, preferably by means of a filter press and/or centrifuge, prior to the agglomeration.

## Revendications

1. Procédé en vue de la récupération de déchets contenant des hydrocarbures et des oxydes de fer, en particulier des boues de battitures de laminage et des charbons fins, de préférence, dans une usine sidérurgique, en particulier, de préférence, en vue de la production de fonte brute et/ou de produits préliminaires d'aciers, le déchet étant mélangé au charbon fin et à des substances bitumineuses et étant ensuite aggloméré, en particulier mis, à l'état froid, sous forme de briquettes et étant également, par la suite, utilisé dans un gazéificateur de fusion en vue de la construction d'un lit fixe et étant converti dans celui-ci dans une zone de gazéification de fusion.

2. Procédé selon la revendication 1, **caractérisé en ce que** le déchet présente une teneur en hydrocarbures supérieure à 0,1% en poids, en particulier supérieure à 0,2 % en poids.

3. Procédé selon la revendication 1 ou 2, **caractérisé en ce que** le déchet est décomposé dans la zone de gazéification de fusion en une portion contenant des hydrocarbures et une portion contenant des oxydes de fer, la portion contenant des hydrocarbures étant convertie pour l'essentiel en CO et H₂, et la portion contenant des oxydes de fer étant réduite et convertie à l'état fondu.

4. Procédé selon l'une quelconque des revendications 1 à 3, **caractérisé en ce que** le charbon fin et/ou le déchet est ou sont mélangé(s), lors de l'agglomération et/ou avant l'agglomération, à des poussières d'usine sidérurgique.

5. Procédé selon l'une quelconque des revendications 1 ou 4, **caractérisé en ce que** le déchet est desséché, avant l'agglomération, de préférence, à l'aide d'un filtre-presse et/ou d'une centrifuge, à moins de 10% en poids d'humidité résiduelle.
